# EUROPÄISCHE PATENTSCHRIFT

(11) **EP 2 768 708 B1**
(45) Veröffentlichungstag und Bekanntmachung des Hinweises auf die Patenterteilung: **08.05.2019**
(21) Anmeldenummer: 12759040.4
(22) Anmeldetag: 28.08.2012
(51) Int. Cl.: B60K 31/00, G05D 13/00

(54) **BESTIMMUNG EINER FAHRSTRATEGIE FÜR EIN FAHRZEUG**
DETERMINING A DRIVING STRATEGY FOR A VEHICLE
DÉTERMINATION D'UNE STRATÉGIE DE CONDUITE POUR UN VÉHICULE

(30) Priorität: 17.10.2011 DE 102011084606
(43) Veröffentlichungstag der Anmeldung: 27.08.2014
(73) Patentinhaber: Robert Bosch GmbH, 70442 Stuttgart (DE)
(72) Erfinder: HUELSEBUSCH, Dirk, 71032 Boeblingen (DE); SALFELD, Maike, 70197 Stuttgart (DE)
(86) Internationale Anmeldenummer: PCT/EP2012/066629
(87) Internationale Veröffentlichungsnummer: WO 2013/056881

(56) Entgegenhaltungen:
- EP-A1- 1 344 672
- WO-A1-2009/126554
- DE-A1-102010 003 428
- JP-A- 2010 167 994
- US-A- 6 076 622
- US-B1- 6 470 256

## Beschreibung

### STAND DER TECHNIK

Die Erfindung betrifft ein Verfahren zur Bestimmung einer Längsdynamik-Fahrstrategie für ein Fahrzeug auf der Basis einer Fahrzustandsvorgabe sowie ein Fahrerassistenzsystem für ein Fahrzeug mit einer Steuerungseinrichtung zum Bestimmen einer Längsdynamik-Fahrstrategie für das Fahrzeug auf der Basis einer Fahrzustandsvorgabe. Insbesondere betrifft die Erfindung ein derartiges Verfahren, bei dem das Fahrzeug ein Kraftfahrzeug ist, sowie ein derartiges Fahrerassistenzsystem für ein Kraftfahrzeug.

EP 1 923 291 A2 beschreibt ein Verfahren zur Schwungnutzung eines Kraftfahrzeuges, bei dem Positionsdaten und Geschwindigkeitsdaten des Kraftfahrzeuges erfasst werden und zusammen mit Daten einer digitalisierten Karte eines Straßennetzes bearbeiten werden, wobei ein Startpunkt ermittelt wird, an dem ein Ausrollen des Kraftfahrzeuges initiiert wird. Beispielsweise kann durch einen entsprechenden Beginn einer Ausrollphase des Kraftfahrzeuges das ausrollende Kraftfahrzeug mit der richtigen Geschwindigkeit am Anfang eines Streckenabschnitts mit einer Geschwindigkeitsbegrenzung ankommen. Der Schwung des Fahrzeuges kann somit ausgenutzt werden, um Energie und Kosten einzusparen und die Umwelt zu schonen.

EP 1 777 135 A1 beschreibt ein Verfahren zur Anpassung von Fahrparametern eines Fahrzeugs, bei dem Positionsdaten des Fahrzeuges zu einem ersten Zeitpunkt ermittelt werden, zukünftige Positionsdaten des Fahrzeuges in einem zukünftigen Zeitraum ermittelt werden und wenigstens ein Fahrparameter unter Zugrundelegung der für den zukünftigen Zeitraum ermittelten Positionsdaten angepasst wird. Dadurch kann der Fahrparameter in energiesparender Weise angepasst werden. So kann beispielsweise auf eine starke Beschleunigung des Fahrzeuges verzichtet werden, wenn das Fahrzeug aufgrund einer Kurve in Kürze wieder verzögert werden müsste.

DE 10 2004 017 115 A1 beschreibt ein Verfahren zur Geschwindigkeitsregelung für ein Fahrzeug in einem automatischen Fahrgeschwindigkeits- oder Abstandsregelungsbetrieb, bei dem bei vorgegebener Sollgeschwindigkeit in einer energiesparenden Betriebsart abwechselnd eine Beschleunigungsphase und eine Ausrollphase des Fahrzeuges stattfinden. In der Beschleunigungsphase wird das Fahrzeug auf eine obere Schwelle für die Geschwindigkeit beschleunigt, und die anschließende Ausrollphase dauert bis zum Erreichen einer unteren Schwelle für die Geschwindigkeit. Bei Erreichen der unteren Schwelle wird das Fahrzeug im verbrauchsoptimierten Bereich wieder auf die obere Schwelle für die Geschwindigkeit beschleunigt.

DE 10 2010 003 428 A1 beschreibt einen Fahrgeschwindigkeitsregler für Kraftfahrzeuge, mit einer Steuereinrichtung, die dazu ausgebildet ist, abhängig von einem aktuellen Wert wenigstens eines den Energieverbrauch des Antriebssystems des Kraftfahrzeugs beeinflussenden Fahrzustandsparameters eine temporäre Abweichung von einer eingestellten Wunschgeschwindigkeit zuzulassen. Als Fahrzustandsparameter werden beispielsweise eine Fahrbahnsteigung oder ein Höhenprofil in der Umgebung des Fahrzeugs genannt.

WO 2009/126554 A1 beschreibt ein Verfahren zur Verbesserung der energieeffizienten Betriebsweise eines Fahrzeugs unter Verwendung vorausschauender Informationen. Ein Betrieb des Fahrzeugs wird modelliert unter Verwendung überwachter Fahrzeug-Betriebscharakteristiken, um Energieverbräuche des Fahrzeugs für erlaubte Betriebsbereiche zu schätzen und auf Basis der Energieverbräuche eine Steuerausgabe an das Fahrzeug zu erzeugen.

EP 1 344 672 A1, US 6,470,256 B1 und US 6,076,622 beschreiben herkömmliche Abstands- und Geschwindigkeitsregler.

Ein Verfahren nach dem Oberbegriff des Anspruchs 1 ist aus JP 2010 167994 A bekannt.

### OFFENBARUNG DER ERFINDUNG

Bei der Senkung des Energiebedarfs und der Emissionen eines Kraftfahrzeuges spielt die Fahrweise eine wesentliche Rolle. Eine effiziente Fahrweise ist hauptsächlich durch einen moderaten Verlauf der Fahrgeschwindigkeit und der Beschleunigung gekennzeichnet. Es werden Fahrerassistenzsysteme entwickelt, die den Fahrer im Hinblick auf eine energiesparende Fahrweise unterstützen, insbesondere hinsichtlich der Ausnutzung der kinetischen und potentiellen Energie des Fahrzeuges.

Bei bekannten Verfahren zum Bestimmen einer Fahrstrategie für ein Kraftfahrzeug auf der Basis einer Fahrzustandsvorgabe, wie beispielsweise einer einem Streckenabschnitt des Straßennetzes zugeordneten Höchstgeschwindigkeit, zukünftigen Positionsdaten des Fahrzeuges für einen zukünftigen Zeitraum, oder einer einzuhaltenden Sollgeschwindigkeit, können ökonomische Aspekte bei der Bestimmung einer Fahrstrategie für das Kraftfahrzeug berücksichtigt werden.

Der Konzeption energiesparender Fahrstrategien sind jedoch dadurch Grenzen gesetzt, dass bei starker Abweichung der Fahrstrategie von einer als üblich empfundenen Fahrstrategie ein Fahrer eines nachfolgenden Fahrzeuges irritiert werden könnte. Wenn beispielsweise in einer bestimmten Verkehrssituation die Geschwindigkeit des Fahrzeugs als sehr langsam empfunden wird, so könnte ein Fahrer eines nachfolgenden Fahrzeugs dazu verleitet werden, zu dicht aufzufahren oder ein unter Umständen riskantes Überholmanöver durchzuführen.

Aufgabe der Erfindung ist es, ein Verfahren zum Bestimmen einer Längsdynamik-Fahrstrategie für ein Fahrzeug zu schaffen, dessen Akzeptanz durch Nutzer und andere Verkehrsteilnehmer verbessert ist.

Diese Aufgabe wird erfindungsgemäß gelöst durch ein Verfahren gemäß Anspruch 1.

Weitere vorteilhafte Ausgestaltungen und Weiterbildungen der Erfindung sind in den Unteransprüchen angegeben.

Bei dem Verfahren erfolgt vorzugsweise die Auswahl unter wenigstens zwei Fahrstrategien auf der Basis derselben Fahrzustandsvorgabe, wobei von den Fahrstrategien eine Fahrstrategie, die vorzugsweise zumindest im Falle eines Nichtvorhandenseins eines nachfolgenden Fahrzeugs ausgewählt wird, energiesparender ist als eine andere Fahrstrategie. Letztere kann beispielsweise bei Vorhandensein eines nachfolgenden Fahrzeugs und optional unter weiteren Bedingungen ausgewählt werden.

Weiter gelöst wird die Aufgabe durch ein Fahrerassistenzsystem gemäß Anspruch 9.

### KURZE BESCHREIBUNG DER ZEICHNUNGEN

Bevorzugte Ausführungsbeispiele der Erfindung sind in den Zeichnungen dargestellt und in der nachfolgenden Beschreibung näher erläutert.

Es zeigen:
- Fig. 1: ein Blockdiagramm eines erfindungsgemäßen Fahrerassistenzsystems;
- Fig. 2: eine schematische Darstellung eines Fahrgeschwindigkeitsverlaufes mit einer Verringerung der Fahrgeschwindigkeit;
- Fig. 3: ein Blockdiagramm eines weiteren Fahrerassistenzsystems, bei dem ein Eingriff in die Längsführung des Fahrzeugs stattfinden kann;
- Fig. 4: ein Blockdiagramm eines weiteren Fahrerassistenzsystems, bei dem ein Verzögern und ein Beschleunigen des Fahrzeugs bewirkt werden kann;
- Fig. 5: eine schematische Darstellung eines Fahrgeschwindigkeitsverlaufes mit einer Erhöhung der Fahrgeschwindigkeit;
- Fig. 6: eine schematische Darstellung eines Fahrgeschwindigkeitsverlaufes zur Beibehaltung einer Sollgeschwindigkeit; und
- Fig. 7: ein Blockdiagramm eines weiteren Fahrerassistenzsystems.

### DETAILLIERTE BESCHREIBUNG VON AUSFÜHRUNGSBEISPIELEN

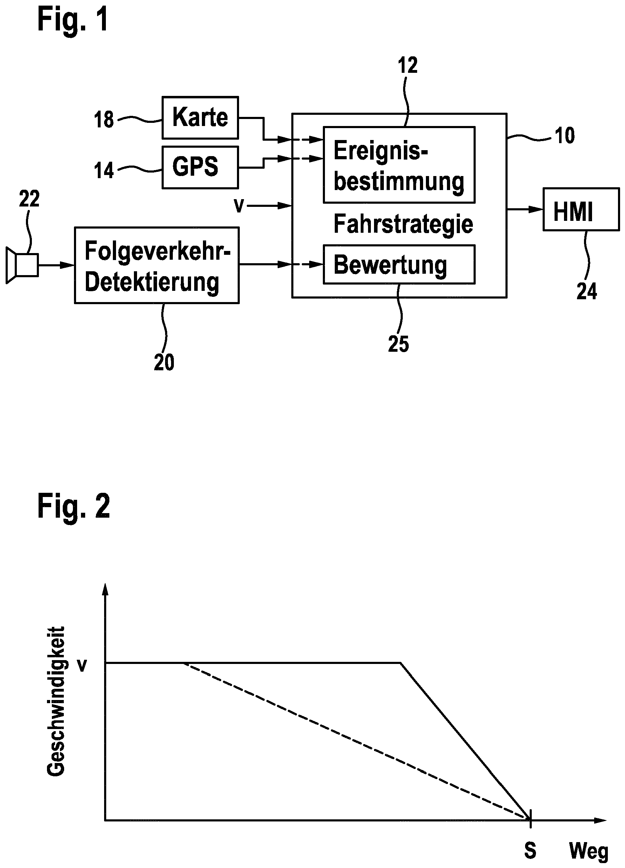

Das in Fig. 1 gezeigte Fahrerassistenzsystem umfasst eine Steuerungseinrichtung 10, die dazu eingerichtet ist, eine Längsdynamik-Fahrstrategie für das eigene Kraftfahrzeug zu bestimmen, wobei das Bestimmen der Längsdynamik-Fahrstrategie darin besteht, einen Zeitpunkt für ein Ausrollen des Fahrzeugs zu bestimmen. Das Fahrzeug hat beispielsweise einen Antriebsmotor in Form eines Verbrennungsmotors.

Das Fahrerassistenzsystem umfasst eine Ereignisbestimmungseinheit 12, welche dazu eingerichtet ist, Ortsinformation betreffend das eigene Fahrzeug von einer Eigenpositionsbestimmungseinrichtung 14, z.B. einem GPS-System, zu erhalten und dazu eingerichtet ist, auf der Basis der Eigenposition des Fahrzeugs und auf der Basis von Ortsinformation über einen voraussichtlich eine zukünftige Verzögerung des Fahrzeugs erfordernden Umstand eine Fahrzustandsvorgabe zu bestimmen. Die Ereignisbestimmungseinheit 12 kann dazu auf eine digitalisierte Karte 18 zugreifen. Im gezeigten Beispiel ist die Ereignisbestimmungseinheit 12 Teil der Steuerungseinrichtung 10. Die Ereignisbestimmungseinheit 12, die Eigenpositionsbestimmungseinrichtung 14 und/oder die digitalisierte Karte 18 können beispielsweise auch Teil eines Navigationsgerätes sein. Die Fahrzustandsvorgabe umfasst beispielsweise eine Zielgeschwindigkeit sowie Information über die noch zurückzulegende Wegstrecke, innerhalb der die Zielgeschwindigkeit zu erreichen ist. Im Falle einer Zielgeschwindigkeit gleich Null soll das Fahrzeug am Ende der Wegstrecke anhalten.

Weiter umfasst das Fahrerassistenzsystem eine Folgeverkehr-Detektionseinheit 20, die zur Erfassung wenigstens eines nachfolgenden Fahrzeugs auf der Basis von Sensorinformation eines rückwärtig am Fahrzeug angeordneten Sensors 22 eingerichtet ist. Die Folgeverkehr-Detektionseinheit 20 bildet mit dem Sensor 22 eine Rückraum-Sensoreinrichtung und kann Teil einer Umfeldsensorik zur Überwachung des Rückraums des eigene Fahrzeugs sein, wie sie als solche zur Überwachung von Nachbarspuren im Rückraum des Fahrzeugs beispielsweise für Spurwechselassistenten bekannt ist. Die Folgeverkehr-Detektionseinheit 20 ist speziell dazu eingerichtet, zu detektieren, ob auf der eigenen Fahrspur ein nachfolgendes Fahrzeug innerhalb eines Abstandsbereichs oder innerhalb einer bestimmten Entfernung, vorhanden ist.

Die besagte Entfernung kann beispielsweise der Reichweite des Sensors entsprechen. Ein innerhalb der besagten Entfernung erfasstes nachfolgendes Fahrzeug wird dann als für die Bestimmung der Fahrstrategie relevant behandelt, also berücksichtigt.

Die Steuerungseinrichtung 10 ist dazu eingerichtet, für eine Fahrzustandsvorgabe unterschiedliche Fahrstrategien zu bestimmen, je nach dem ob die Folgeverkehr-Detektionseinheit 20 ein nachfolgendes Fahrzeug innerhalb der besagten Entfernung erfasst oder nicht. Bei Nichtvorhandensein eines nachfolgenden Fahrzeugs wird beispielsweise auf der Basis der Fahrzustandvorgabe und der momentanen Fahrgeschwindigkeit v ein Startpunkt ermittelt, an dem ein Ausrollen des Kraftfahrzeugen initiiert werden soll. Dazu wird für eine bestimmte Position der Verlauf der entsprechenden Ausrollgeschwindigkeit berechnet, die berechnete Ausrollgeschwindigkeit am Ende der Wegstrecke wird mit der Zielgeschwindigkeit, die dem Ende der Wegstrecke zugeordnet ist, verglichen, und die bestellte Position wird als Startpunkt zum Initialisieren des ausrollenden Vorgangs festgelegt, wenn die Ausrollgeschwindigkeit am Ende der Wegstrecke die Zielgeschwindigkeit überschreitet. In diesem Fall kann das Fahrzeug voraussichtlich die Wegstrecke vollständig im Zustand des Ausrollens zurücklegen. Aus EP 1 923 291 A2 ist ein solches Verfahren zur Schwungnutzung eines Kraftfahrzeugs an sich bekannt.

Über eine Fahrerschnittstelle 24 oder Mensch-Maschine-Schnittstelle (HMI, Human Machine Interface) kann Information über die bestimmte Fahrstrategie an den Fahrer ausgegeben werden. Beispielsweise kann das Erreichen des bestimmten Zeitpunktes zum Initialisieren des Ausrollvorgangs dem Fahrer mitgeteilt werden. Der Fahrer wird beispielsweise über ein visuelles oder akustisches Signal darauf hingewiesen, dass er vom Fahrpedal gehen kann beziehungsweise das Getriebe in den Leerlauf schalten kann, um den Ausrollvorgang einzuleiten.

Als Umstände, die eine Verringerung der Fahrgeschwindigkeit erfordern, kommen beispielsweise Geschwindigkeitsbegrenzungen, Vorfahrtregelungsschilder und Straßenkreuzungen in Betracht. Die Steuerungseinrichtung 10 ist dazu eingerichtet, die aktuelle Ausroll-Reichweite, also die Reichweite im Ausrollbetrieb, zu bestimmen auf Basis eines Längsdynamik-Modells und eines anhand der digitalisierten Karte 18 bestimmten vorausliegenden Steigungsprofils.

Im Falle des Vorhandenseins eines nachfolgenden Fahrzeugs innerhalb der vorgegebenen Entfernung bestimmt die Steuerungseinrichtung 10 einen späteren Startpunkt für den Ausrollvorgang. Dadurch kann zwar weniger Energie bzw. Kraftstoff eingespart werden als bei der zuerst beschriebenen Fahrstrategie. Es kann aber erreicht werden, dass der Ausrollvorgang nicht als zu langsam bzw. zu lange andauernd empfunden wird.

Fig. 2 zeigt zur Veranschaulichung schematisch die unterschiedlichen Fahrgeschwindigkeitsprofile, die sich bei den oben beschriebenen Arbeitsverfahren des Fahrerassistenzsystems bei den unterschiedlichen Fahrstrategien mit oder ohne Vorhandensein eine nachfolgenden Fahrzeugs ergeben. Dargestellt ist vereinfacht der Verlauf der Fahrgeschwindigkeit v über dem Weg, wobei mit S eine Position, an der das Fahrzeug anhalten soll, gekennzeichnet ist. Die Darstellung ist lediglich schematisch. Insbesondere braucht in der Praxis der Verzögerungsvorgang des Fahrzeugs im Geschwindigkeits-Weg-Diagramm nicht linear zu verlaufen.

Bei Nichtvorhandensein eines nachfolgenden Fahrzeugs ergibt sich, ausgehend von der zunächst vorhandenen Geschwindigkeit, der gestrichelt dargestellte Fahrgeschwindigkeitsverlauf, bei dem die Fahrgeschwindigkeit während des Ausrollens abnimmt. Im Vergleich dazu wird bei dem Fahrgeschwindigkeitsverlauf bei Vorhandensein eines nachfolgenden Fahrzeugs, der mit einer durchgezogenen Linie dargestellt ist, zunächst die vorhandene Geschwindigkeit bis zu einem späteren Zeitpunkt gehalten, und eine Fahrgeschwindigkeitsverringerungsphase erstreckt sich über einen kürzeren Streckenabschnitt und dementsprechend über einen kürzeren Zeitraum. Die Fahrgeschwindigkeitsverringerungsphase kann beispielsweise durch Rollen im Schubbetrieb verkürzt werden.

Fig. 2 verdeutlicht, dass bei Nichtvorhandensein eines nachfolgenden Fahrzeugs eine Fahrstrategie bestimmt wird, die eine früher beginnende und sich über eine längere Zeitdauer erstreckende Geschwindigkeitsverringerungsphase vorsieht. Während der Geschwindigkeitsverringerungsphase der kraftstoffsparenderen Fahrstrategie wird eine Wegstrecke zurückgelegt, auf der diese Fahrstrategie kraftstoffsparender ist als die Fahrstrategie auf derselben Wegstrecke bei Vorhandensein eines nachfolgenden Fahrzeuges. Denn bei letzterer wird zunächst die vorhandene Fahrgeschwindigkeit weiter beibehalten und somit insgesamt mehr Kraftstoff verbraucht. Auch bei Vergleich des Zeitraums der Geschwindigkeitsverringerungsphase der kraftstoffsparenderen Fahrstrategie mit dem gleichen Zeitraum bei Vorhandensein eines nachfolgenden Fahrzeugs zeigt sich, dass während dieses Zeitraumes bei der Fahrstrategie bei Nichtvorhandensein eines nachfolgenden Fahrzeugs insgesamt Kraftstoff eingespart wird.

Optional umfasst die Steuerungseinrichtung 10 eine Bewertungseinheit 25, die dazu eingerichtet ist, ein erfasstes nachfolgendes Fahrzeug auf Grund seines Abstandes und/oder seiner Relativgeschwindigkeit als für die Bestimmung der Fahrstrategie relevant zu bewerten. Dazu kann die Steuerungseinrichtung 10 auf Grund der Relativgeschwindigkeit eine Entfernung bestimmen, innerhalb derer das nachfolgende Fahrzeug für die Bestimmung der Fahrstrategie relevant ist. Demgegenüber sind Fahrzeuge, die einen unter Berücksichtigung ihrer Relativgeschwindigkeit ausreichenden Abstand aufweisen, nicht relevant. Die oben beschriebene Auswahl der Fahrstrategie erfolgt dann in Abhängigkeit von der Erfassung eines als relevant bewerteten Fahrzeugs, d.h. in Abhängigkeit vom Vorhandensein eines Fahrzeugs innerhalb der bestimmten Entfernung.

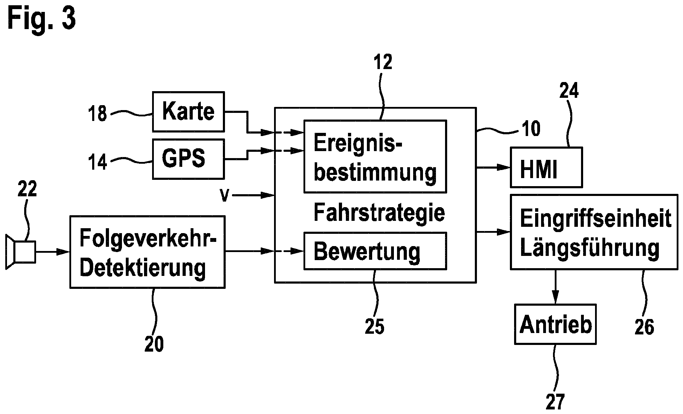

Fig. 3 zeigt eine Variante des Fahrerassistenzsystems nach Fig. 1, bei dem zusätzlich eine Eingriffseinheit 26 zum Eingriff in die Längsführung des Fahrzeugs vorhanden ist. Bei der Eingriffseinheit 26 kann es sich beispielsweise um eine Fahrzeuglängsregelung in Form eines Fahrgeschwindigkeitsreglers handeln, etwa einen Tempomaten. Die Steuerungseinrichtung 10 ist mit der Eingriffseinheit 26 verbunden, um auf der Basis der bestimmten Fahrstrategie automatisch in die Längsführung des Fahrzeugs einzugreifen, insbesondere durch Ansteuerung einer Antriebseinrichtung 27. Die Steuerungseinrichtung 10 ist dazu eingerichtet, beim Erreichen des Startpunktes für den Ausrollvorgang in die Längsführung des Fahrzeugs einzugreifen und den Ausrollvorgang autonom einzuleiten. Der Fahrer braucht somit zur Einleitung des Auswahlvorgangs nicht aktiv werden, sondern überwacht lediglich den Betrieb. Am Ende des Ausrollvorgangs kann der Fahrer beispielsweise das Fahrzeug eigenständig abbremsen oder zum Stillstand bringen, wenn die Eingriffseinheit 26 keinen Zugriff auf eine Bremsanlage des Fahrzeugs hat.

Wiederum entspricht in den beiden Fällen des Vorhandenseins oder Nichtvorhandenseins eines nachfolgenden Fahrzeugs innerhalb der bestimmten Entfernung der Fahrgeschwindigkeitsverlauf der durch die Steuerungseinrichtung 10 bestimmten Fahrstrategie der jeweiligen schematischen Darstellung nach Fig. 2.

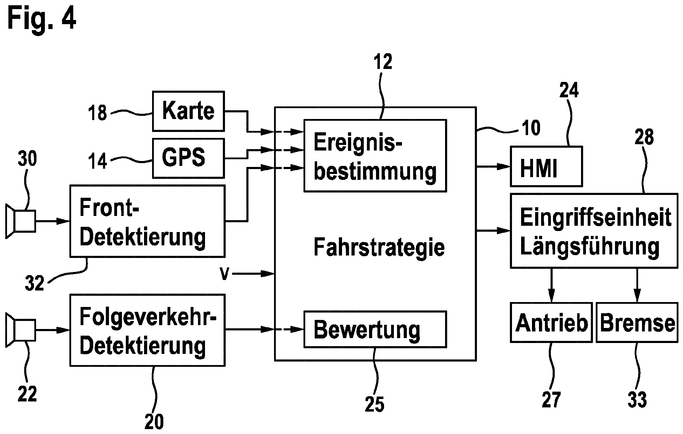

Fig. 4 zeigt eine weitere Variante des Fahrerassistenzsystems nach Fig. 1 und 3. Anstelle einer Eingriffseinheit 26 in Form eines Tempomaten ist eine Eingriffseinheit 28 zum Eingriff in die Längsführung des Fahrzeugs in Form eines adaptiven Fahrgeschwindigkeits- und Abstandsreglers vorgesehen. Eine solche Fahrzeuglängsregelung wird auch als ACC (Adaptive Cruise Control) bezeichnet. Die Steuerungseinrichtung 10 ist dazu mit einer Frontsensorik verbunden, die einen Sensor 30 und eine Frontdetektierungseinrichtung 32 zur Erfassung eines sich vor dem eigenen Fahrzeug befindenden Fahrzeugs, insbesondere in der eigenen Spur vorausfahrenden Fahrzeugs, aufweist. Eine solche Frontsensorik einer Fahrzeuglängsregelung ist als solche bekannt. Durch die Frontsensorik 30, 32 und die Eingriffseinheit 28 kann die Fahrzeugbewegung in weiten Grenzen voll automatisiert werden, und die Steuerungseinrichtung 10 ist dazu eingerichtet, bei Bestimmung der Fahrzustandsvorgabe eine Erfassung eines sich in der eigenen Fahrspur vor dem eigenen Fahrzeug befindenden Fahrzeugs zu berücksichtigen.

Die Eingriffseinheit 28 ist dazu eingerichtet, insbesondere eine Beschleunigung des Fahrzeugs herbeiführen zu können und, durch Eingriff in eine Bremseinrichtung 33, eine mechanische Bremsung herbeiführen zu können.

Wie bei den Beispielen der Fig. 1 und 3 ist die Steuerungseinrichtung 10 dazu eingerichtet, in dem Fall, dass die Fahrzustandsvorgabe eine Verringerung der Fahrgeschwindigkeit erfordert, bei Nichtvorhandensein eines relevanten nachfolgenden Fahrzeugs eine Fahrstrategie zu bestimmen, die eine früher beginnende und sich über eine längere Zeitdauer erstreckende Geschwindigkeitsverringerungsphase vorsieht als eine bei Vorhandensein eines relevanten nachfolgenden Fahrzeugs bestimmte Fahrstrategie.

Weiter ist die Ereignisbestimmungseinheit 12 in diesem Beispiel dazu eingerichtet, die Fahrzustandsvorgabe auf der Basis von Information über einen voraussichtlich eine zukünftige Erhöhung der Fahrgeschwindigkeit zulassenden Umstand zu bestimmen, insbesondere unter Berücksichtigung einer Sollgeschwindigkeit. Beispielsweise kann die Fahrzustandsvorgabe eine Zielgeschwindigkeit umfassen, die gegenüber der aktuellen Fahrgeschwindigkeit erhöht ist und kleiner oder gleich einer Sollgeschwindigkeit des adaptiven Fahrgeschwindigkeitsreglers ist. Beispielsweise kann die Ereignisbestimmungseinheit 12 dazu eingerichtet sein, basierend auf Ortsinformation über das eigene Fahrzeug und basierend auf Ortsinformation über einen eine Geschwindigkeitserhöhung zulassenden Umstand eine Zielgeschwindigkeit zu bestimmen. Ein Beispiel dafür ist eine Änderung oder Aufhebung einer Geschwindigkeitsbegrenzung. Die aktuelle Position des eigenen Fahrzeugs wird mittel der Eigenpositionsbestimmungseinrichtung 14 erfasst und in Beziehung zu in der digitalen Karte 18 verzeichneten, derartigen Umständen gesetzt. Insbesondere kann der Abstand zu entsprechenden Ereignissen ermittelt werden.

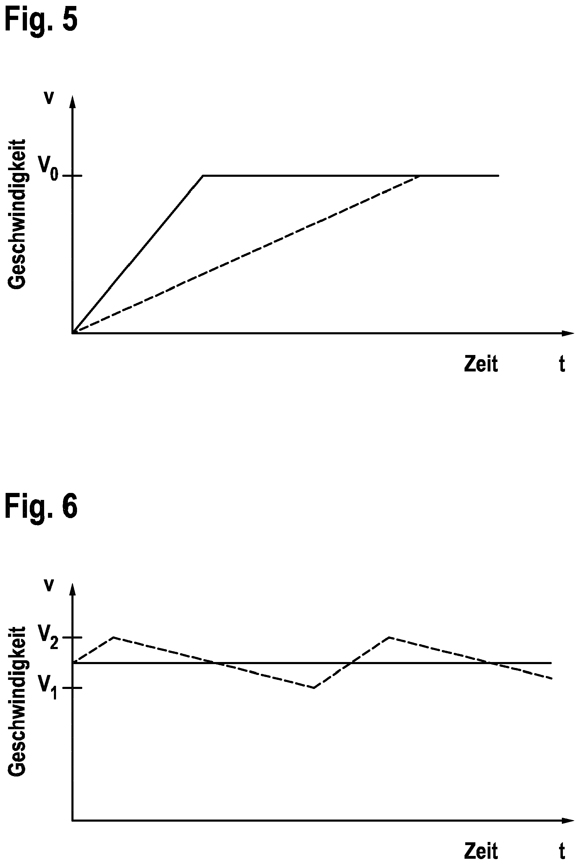

Die Steuerungseinrichtung 10 ist dazu eingerichtet, in dem Fall, dass die Fahrzustandsvorgabe eine Erhöhung der Fahrgeschwindigkeit erfordert, bei Nichtvorhandensein eines relevanten nachfolgenden Fahrzeugs eine Fahrstrategie zu bestimmen, die eine sich über eine längere Zeitdauer erstreckende Geschwindigkeitserhöhungsphase vorsieht als eine bei Vorhandensein eines relevanten nachfolgenden Fahrzeugs bestimmte Fahrstrategie. Für diese beiden Fälle sind beispielhaft in Fig. 5 schematisch Fahrgeschwindigkeitsverläufe dargestellt.

Fig. 5 zeigt vereinfacht und schematisch einen gestrichelt dargestellten Verlauf der Fahrgeschwindigkeit v über der Zeit t, der eine Geschwindigkeitserhöhungsphase auf eine Zielgeschwindigkeit V₀ umfasst und einer moderaten, kraftstoffsparenderen Beschleunigung entspricht. Im Vergleich dazu zeigt der mit einer durchgezogenen Linie dargestellte Fahrgeschwindigkeitsverlauf eine größere Beschleunigung und ein früheres Erreichen der Zielgeschwindigkeit.

Während somit bei einem freien Heckbereich hinter dem Fahrzeug eine langsamere Beschleunigung erfolgt und somit der Kraftstoffverbrauch und Energiebedarf gesenkt wird, wird bei Vorhandensein eines hinterherfahrenden Fahrzeugs die Beschleunigung erhöht und somit eine Erhöhung der Nutzerakzeptanz und der Sicherheit gewährleistet.

Die Steuerungseinrichtung 10 kann beispielsweise durch Vorgabe eines Antriebmomentes oder durch Vorgabe des bestimmten Fahrgeschwindigkeitsverlaufes über die Eingriffseinheit 28 die Beschleunigung gemäß der bestimmten Fahrstrategie herbeiführen. Es kann eine Signalisierung an den Fahrer über die optionale Fahrerschnittstelle 24 und/oder ein Eingriff in die Längsführung erfolgen.

Auch bei dem System gemäß Fig. 3 ist die Eingriffseinheit 26 ist dazu eingerichtet, eine Beschleunigung des Fahrzeugs herbeiführen zu können, beispielsweise eine Beschleunigung von einer gegebenen Geschwindigkeit auf eine Sollgeschwindigkeit des Tempomaten. Die Steuerungseinrichtung 10 kann hier dazu eingerichtet sein, im Falle, dass die Fahrzustandsvorgabe eine Erhöhung der Fahrgeschwindigkeit erfordert, ein Fig. 5 entsprechendes Verfahren zur Bestimmung einer Fahrstrategie auszuführen, jedoch ausgehend von der gegebenen Geschwindigkeit.

In dem Fall, dass die Fahrzustandsvorgabe eine Verringerung der Fahrgeschwindigkeit erfordert, ermöglicht das System mit adaptiver Fahrzeugslängsregelung neben einem Ausrollenlassen weitere Möglichkeiten einer Fahrstrategie, insbesondere einer kraftstoffsparenden Fahrstrategie entsprechend Fig. 2. Insbesondere kann die Steuerungseinrichtung 10 der Fig. 4 dazu eingerichtet sein, gemäß der bestimmten Fahrstrategie das Fahrzeug autonom bis in den Stillstand zu verzögern. Die zur Auswahl stehenden Fahrstrategien können beispielsweise ein Ausrollen in Schubbetrieb des Verbrennungsmotors, ein Ausrollen im Leerlauf, ein Ausrollen mit ausgeschaltetem Verbrennungsmotor, ein Ausrollen oder Verzögern mit Rekuperation im Falle eines Hybridfahrzeugs und/oder ein mechanisches Bremsen umfassen.

Weiter ist die Steuerungseinrichtung 10 in den Beispielen der Fig. 3 und 4 dazu eingerichtet, bei Ausbleiben von Umständen, die eine Änderung der Fahrgeschwindigkeit erfordern, als Fahrzustandsvorgabe eine Zielgeschwindigkeit entsprechend einer aktuellen Sollgeschwindigkeit des Tempomats bzw. der adaptiven Fahrzeuglängsregelung zu bestimmen. In diesem Fall, dass die Fahrzustandsvorgabe eine Beibehaltung der Sollgeschwindigkeit erfordert, bestimmt die Steuerungseinrichtung 10 bei Nichtvorhandensein eines relevanten nachfolgenden Fahrzeugs eine Fahrstrategie, bei der die Fahrgeschwindigkeit in einen größeren Bereich um die Sollgeschwindigkeit variiert als bei einer bei Vorhandensein eines relevanten nachfolgenden Fahrzeugs bestimmten Fahrstrategie. Die bei Nichtvorhandensein eines relevanten Fahrzeugs bestimmte Fahrstrategie weist beispielsweise eine Phase einer allmählichen Geschwindigkeitserhöhung und, bei Erreichen einer oberen Schwelle V₂ für die Geschwindigkeit, eine Phase einer allmählichen Geschwindigkeitsverringerung sowie bei Erreichen einer unteren Schwelle V₁ für die Geschwindigkeit erneut eine Phase einer allmählichen Geschwindigkeitserhöhung auf die obere Schwelle V₂ für die Geschwindigkeit auf. Ein solches Verfahren zur Geschwindigkeitsregelung in einem automatischen Fahrgeschwindigkeitsbetrieb und/ oder einem automatischen Abstandsregelungsbetrieb einer adaptiven Fahrzeuglängsregelung ist beispielsweise aus DE 10 2004 017 115 A1 bekannt.

Fig. 6 zeigt schematisch mit einer gestrichelten Linie den entsprechenden Fahrgeschwindigkeitsverlauf, bei dem sich eine Geschwindigkeitserhöhungsphase und eine Geschwindigkeitsverringerungsphase abwechseln. Zum Vergleich ist mit einer durchgezogenen Linie eine Fahrstrategie zur Beibehaltung der Sollgeschwindigkeit mit wesentlich geringerer Abweichung von der Sollgeschwindigkeit dargestellt, entsprechend einem Fahrgeschwindigkeitsverlauf, der bei Vorhandensein eines nachfolgenden Fahrzeugs bestimmt wird.

Während der Zeiträume einer jeweiligen Geschwindigkeitsverringerungsphase, sowie auf den entsprechenden Wegstrecken, ist die bei Nichtvorhandensein eines relevanten Fahrzeugs bestimmte Fahrstrategie kraftstoffsparender als die Fahrstrategie bei Vorhandensein eines relevanten Fahrzeugs. Auch insgesamt ist die bei Nichtvorhandensein eines relevanten Fahrzeugs gewählte Fahrstrategie kraftstoffsparender. Beispielsweise kann während einer jeweiligen Fahrgeschwindigkeitsverringerungphase ein Ausrollen des Fahrzeugs bis zum Erreichen der unteren Schwelle erfolgen. Das Beschleunigen bis zur oberen Schwelle kann beispielsweise in einem verbrauchsgünstigen Drehzahlbereich eines Motors erfolgen.

Somit kann bei Fahrten mit konstanter Geschwindigkeit bei einem freien Heckbereich hinter dem Fahrzeug die Geschwindigkeit in einem größeren Bereich variiert werden und somit eine möglichst effiziente Fahrweise umgesetzt werden.

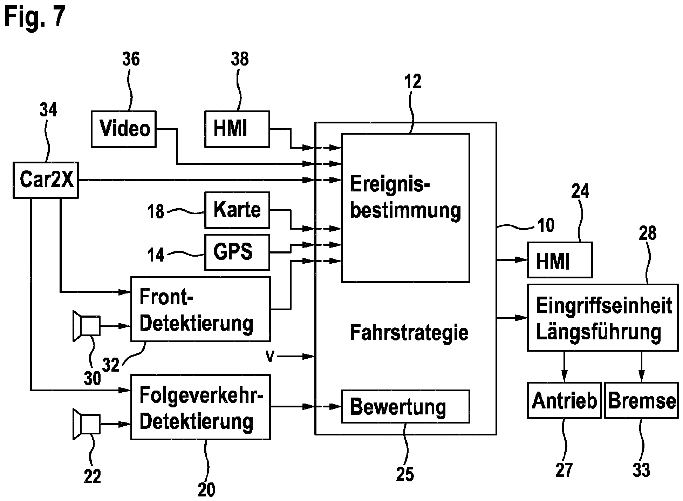

Fig. 7 zeigt ein Fahrerassistenzsystem, das gegenüber dem System nach Fig. 4 erweitert ist. Das Fahrerassistenzsystem weist zusätzlich ein Kommunikationssystem 34 auf, beispielsweise ein Fahrzeugkommunikationssystem zur Kommunikation mit einem Kommunikationssystem außerhalb des Fahrzeugs, etwa ein Car2X-Kommunikationssystem, insbesondere ein Car2Car-Kommunikationssystem. Das Kommunikationssystem 34 ist dazu eingerichtet, Ortsinformation über einen voraussichtlich eine zukünftige Verzögerung des Fahrzeugs erfordernden Umstand oder einen voraussichtlich eine zukünftige Erhöhung der Fahrgeschwindigkeit zulassenden Umstand zu empfangen. Bei einem solchen Umstand kann es sich beispielsweise um eine Geschwindigkeitsbegrenzung oder deren Ende, etwa einen Beginn oder ein Ende einer geschwindigkeitsbegrenzten Wegstrecke, eine Lichtsignalanlage, Informationen über Ampelphasen oder Schaltphasen vorausliegender Lichtsignalanlagen, oder einen anderen Verkehrsteilnehmer, beispielsweise ein langsameres vorausfahrendes Fahrzeug handeln. Es kann die Ortsinformation und/oder Information über den Umstand empfangen werden. Die Steuerungseinrichtung, insbesondere deren Ereignisbestimmungseinheit 12, ist dazu eingerichtet, eine Fahrzustandsvorgabe auf der Basis der empfangenen Ortsinformation zu bestimmen.

Die Folgeverkehr-Detektionseinheit 20 kann dazu eingerichtet sein, das Vorhandensein eines nachfolgenden Fahrzeugs sowie ggf. dessen Abstand und Geschwindigkeit über die Kommunikationsschnittstelle 34 zu erfassen. Diese ist dazu eingereichtet, Ortsinformation über andere Fahrzeuge in der Umgebung des eigenen Fahrzeugs zu empfangen. Die Kommunikationsschnittstelle 34 kann auch alternativ zum Sensor 22 der Folgeverkehr-Detektionseinheit 20 vorgesehen sein.

Die Frontdetektierungseinrichtung 32 kann dazu eingerichtet sein, ein sich vor dem eigenen Fahrzeug befindendes Fahrzeug über die Kommunikationsschnittstelle 34 zu erfassen, insbesondere ein in der eigenen Spur vorausfahrendes Fahrzeug. Die Kommunikationsschnittstelle 34 kann auch alternativ zum Sensor 30 der Frontdetektierungseinrichtung 32 vorgesehen sein.

Ein aktueller Zustand einer nächsten Lichtsignalanlage oder Ampel kann beispielsweise auch über eine geeignete Sensorik 36, etwa eine Videosensorik, oder über eine Fahrerschnittstelle 38 (HMI) vom Fahrer der Steuerungseinrichtung 10 mitgeteilt werden. Die ermittelte Ortsinformation sowie die über die Fahrerschnittstelle 38 oder über die Sensorik 36 empfangene Information kann bei der Bestimmung der Fahrstrategie berücksichtigt werden. So kann beispielsweise bei der Bestimmung einer Zielgeschwindigkeit berücksichtigt werden, ob eine Lichtsignalanlage ein Anhalten und somit eine entsprechende Verringerung der Geschwindigkeit erfordert, oder ob dies nicht der Fall ist, etwa bei grüner Ampelphase. Über das Kommunikationssystem 34 kann beispielsweise festgestellt werden, ob der Verkehr im Bereich der nächsten Lichtsignalanlage fließt und somit kein Anhalten erforderlich ist.

Bei allen beschriebenen Beispielen kann die Auswahl einer Fahrstrategie zusätzlich in Abhängigkeit von Information über die Anzahl und/oder die Belegung der Fahrspuren, insbesondere der Fahrspuren in Fahrtrichtung, erfolgen. Die Ermittelung solcher Information ist beispielsweise für Spurwechselassistenten an sich bekannt. So können beispielsweise die Folgeverkehr-Detektionseinheit 20 und/oder die Frontdetektierungseinrichtung 32 dazu eingerichtet sein, der Steuerungseinrichtung 10 Information über die Anzahl und/oder die Belegung der Fahrspuren zuzuführen. Die Auswahl der Fahrstrategie kann in Abhängigkeit davon erfolgen, ob eine Überholmöglichkeit für ein nachfolgendes Fahrzeug besteht, insbesondere eine Überholmöglichkeit auf einer Fahrspur in Fahrtrichtung. Besteht eine Überholmöglichkeit, so kann wiederum eine energiesparendere Fahrstrategie gewählt werden als anderenfalls.

Während in den Ausführungsbeispielen von einem Kraftfahrzeug mit Verbrennungsmotor ausgegangen wurde, kann das erfindungsgemäße Verfahren und das erfindungsgemäße Fahrerassistenzsystem auch in Fahrzeugen mit anderem Antriebskonzept eingesetzt werden, beispielsweise bei einem Fahrzeug mit Hybridantrieb, Brennstoffzellenantrieb und/oder rein elektrischem Antrieb wie einem Batteriefahrzeug.

Das Kommunikationssystem 34 für die Ereignisbestimmung und/oder die Erfassung von Fahrzeugen, die Sensorik 36 und/oder die Fahrerschnittstelle 38 können auch in den anderen Ausführungsbeispielen vorgesehen sein.

## Patentansprüche

1. Verfahren zur Bestimmung einer Längsdynamik-Fahrstrategie für ein Fahrzeug auf der Basis einer Fahrzustandsvorgabe, bei dem eine Auswahl einer Fahrstrategie unter Berücksichtigung des Energieverbrauchs erfolgt, wobei die Auswahl zusätzlich in Abhängigkeit von einer Erfassung eines nachfolgenden Fahrzeugs durch eine Folgeverkehr-Detektionseinheit (20) erfolgt, **dadurch gekennzeichnet, dass** dem in dem Fall, dass die Fahrzustandsvorgabe eine Änderung der Fahrgeschwindigkeit erfordert, die Auswahl unter wenigstens zwei Fahrstrategien erfolgt, von denen eine Fahrstrategie, die zumindest im Falle eines Nichtvorhandenseins eines nachfolgenden Fahrzeugs ausgewählt wird, eine sich über eine längere Zeitdauer erstreckende Geschwindigkeitsänderungsphase vorsieht als eine andere Fahrstrategie.

2. Verfahren nach Anspruch 1, wobei die Fahrzustandsvorgabe eine Zielgeschwindigkeit (V₀) umfasst.

3. Verfahren nach Anspruch 1 oder 2, wobei die Auswahl unter Berücksichtigung des Energieverbrauchs und zusätzlich in Abhängigkeit eines Abstandes und/oder einer Geschwindigkeit eines erfassten nachfolgenden Fahrzeugs erfolgt.

4. Verfahren nach einem der vorstehenden Ansprüche, bei dem die Auswahl unter wenigstens zwei Fahrstrategien erfolgt, von denen eine Fahrstrategie, die zumindest im Falle eines Nichtvorhandenseins eines nachfolgenden Fahrzeugs ausgewählt wird, energiesparender ist als eine andere Fahrstrategie.

5. Verfahren nach einem der vorstehenden Ansprüche, wobei die Auswahl unter wenigstens zwei Fahrstrategien erfolgt, die sich wenigstens hinsichtlich einer Zeitdauer und/oder eines Betrags einer Geschwindigkeitsänderungsphase voneinander unterscheiden.

6. Verfahren nach einem der vorstehenden Ansprüche, bei dem in dem Fall, dass die Fahrzustandsvorgabe eine Beibehaltung einer Sollgeschwindigkeit erfordert, die Auswahl unter wenigstens zwei Fahrstrategien erfolgt, von denen bei einer Fahrstrategie, die zumindest im Falle eines Nichtvorhandenseins eines nachfolgenden Fahrzeugs ausgewählt wird, die Fahrgeschwindigkeit in einem größeren Bereich um die Sollgeschwindigkeit variiert als bei einer anderen Fahrstrategie.

7. Verfahren nach einem der vorstehenden Ansprüche, bei dem über eine Fahrerschnittstelle (24) Information über die bestimmte Fahrstrategie an den Fahrer des Fahrzeugs ausgegeben wird.

8. Verfahren nach einem der vorstehenden Ansprüche, bei dem auf der Basis der bestimmten Fahrstrategie automatisch ein Eingriff in die Längsführung des Fahrzeugs erfolgt.

9. Fahrerassistenzsystem für ein Fahrzeug, mit einer Steuerungseinrichtung (10) zum Bestimmen einer Längsdynamik-Fahrstrategie für das Fahrzeug auf der Basis einer Fahrzustandsvorgabe, und mit einer Folgeverkehr-Detektionseinheit (20) zur Erfassung eines nachfolgenden Fahrzeugs, wobei die Steuerungseinrichtung (10) dazu eingerichtet ist,das Verfahren nach einem der Ansprüche 1bis 8 auszuführen.

10. Fahrerassistenzsystem nach Anspruch 9, weiter aufweisend ein Kommunikationssystem (34) zum Empfang von Ortsinformation über einen voraussichtlich eine zukünftige Verzögerung des Fahrzeugs erfordernden oder eine voraussichtlich eine zukünftige Erhöhung der Fahrgeschwindigkeit zulassenden Umstand, wobei die Steuerungseinrichtung (10) dazu eingerichtet ist, die Fahrzustandsvorgabe auf der Basis der empfangenen Ortsinformation zu bestimmen.

11. Fahrerassistenzsystem nach Anspruch 9 oder 10, weiter aufweisend eine Eingriffseinheit (26; 28) zum Eingriff in die Längsführung des Fahrzeugs, wobei die Steuerungseinrichtung (10) mit der Eingriffseinheit (26; 28) verbunden ist, um auf der Basis der bestimmten Fahrstrategie in die Längsführung des Fahrzeugs einzugreifen.

## Claims

1. Method for determining a longitudinal-dynamic driving strategy for a vehicle on the basis of a driving state specification, in which a selection of a driving strategy is made taking into account the energy consumption, wherein the selection is additionally made as a function of detection of a vehicle travelling behind by means of a following traffic detection unit (20), **characterized in that** in the event of the driving state specification requiring a change in the velocity the selection is made between at least two driving strategies, one driving strategy of which, which is selected at least in the case of the absence of a vehicle travelling behind, provides a velocity change phase, extending over a relatively long time period, as another driving strategy.

2. Method according to Claim 1, wherein the driving state specification comprises a target velocity (V₀).

3. Method according to Claim 1 or 2, wherein the selection is made taking into account the energy consumption and additionally as a function of a distance and/or a velocity of a detected vehicle travelling behind.

4. Method according to one of the preceding claims, in which the selection is made between at least two driving strategies, one driving strategy of which, which is selected at least in the case of the absence of a vehicle travelling behind, is more economical in terms of energy than another driving strategy.

5. Method according to one of the preceding claims, wherein the selection is made between at least two driving strategies which differ from one another at least in terms of a time period and/or of an absolute value of a velocity change phase.

6. Method according to one of the preceding claims, in which in the event of the driving state specification requiring a setpoint velocity to be maintained, the selection is made between at least two driving strategies, of which, in the case of a driving strategy which is selected at least in the case of the absence of a vehicle travelling behind, the velocity varies in a greater range around the setpoint velocity than in another driving strategy.

7. Method according to one of the preceding claims, in which information about the determined driving strategy is output to the driver of the vehicle via a driver interface (24).

8. Method according to one of the preceding claims, in which an intervention into the longitudinal guidance of the vehicle is made automatically on the basis of the determined driving strategy.

9. Driver assistance system for a vehicle, having a control device (10) for determining a longitudinal-dynamic driving strategy for the vehicle on the basis of a driving state specification, and having a following traffic detection unit (20) for detecting a vehicle travelling behind, wherein the control device (10) is configured to execute the method according to one of Claims 1 to 8.

10. Driver assistance system according to Claim 9, also having a communication system (34) for receiving location information about a circumstance which is anticipated to require future deceleration of the vehicle or is anticipated to permit a future increase in the velocity, wherein the control device (10) is configured to determine the driving state specification on the basis of the received location information.

11. Driver assistance system according to Claim 9 or 10, also having an intervention unit (26; 28) for intervening in the longitudinal guidance of the vehicle, wherein the control device (10) is connected to the intervention unit (26; 28), in order to intervene in the longitudinal guidance of the vehicle on the basis of the determined driving strategy.

## Revendications

1. Procédé de détermination d'une stratégie de conduite avec dynamique longitudinale pour un véhicule sur la base d'une spécification de l'état de conduite, dans lequel une sélection de la stratégie de conduite est effectuée en tenant compte de la consommation d'énergie, dans lequel la sélection est en outre effectuée en fonction de la détection d'un véhicule suivant par une unité de détection de circulation suivante (20), **caractérisé en ce que**, dans le cas où la spécification de l'état de conduite nécessite une modification de la vitesse de conduite, la sélection est effectuée entre au moins deux stratégies de conduite, parmi lesquelles une stratégie, qui est sélectionnée au moins en cas d'absence d'un véhicule suivant, prévoit une phase de modification de vitesse s'étendant sur une période de temps supérieure à celle d'une autre stratégie de conduite.

2. Procédé selon la revendication 1, dans lequel la spécification de l'état de conduite comprend une vitesse cible (V₀).

3. Procédé selon la revendication 1 ou 2, dans lequel la sélection est effectuée en tenant compte de la consommation d'énergie et en fonction de la distance et/ou de la vitesse d'un véhicule suivant détecté.

4. Procédé selon l'une des revendications précédentes, dans lequel la sélection est effectuée entre au moins deux stratégies de conduite, parmi lesquelles une stratégie de conduite, qui est sélectionnée au moins en l'absence de véhicule suivant, est plus économe en énergie qu'une autre stratégie de conduite.

5. Procédé selon l'une des revendications précédentes, dans lequel la sélection est effectuée entre au moins deux stratégies de conduite qui diffèrent l'une de l'autre au moins en ce qui concerne une durée et/ou une valeur d'une phase de changement de vitesse.

6. Procédé selon l'une des revendications précédentes, dans lequel, dans le cas où les spécifications d'état de conduite exigent le maintien d'une vitesse de consigne, la sélection est effectuée entre au moins deux stratégies de conduite, parmi lesquelles, dans le cas d'une stratégie de conduite, qui est sélectionnée au moins en cas d'absence d'un véhicule suivant, la vitesse de conduite est amenée à varier autour de la vitesse de consigne dans une plage supérieure à celle d'une autre stratégie.

7. Procédé selon l'une des revendications précédentes, dans lequel des informations concernant la stratégie de conduite déterminée sont transmises au conducteur du véhicule par l'intermédiaire d'une interface de conducteur (24).

8. Procédé selon l'une des revendications précédentes, dans lequel un basculement automatique du véhicule dans le mode de guidage longitudinal du véhicule est effectué sur la base de la stratégie de conduite déterminée.

9. Système d'aide à la conduite pour un véhicule, comprenant un dispositif de commande (10) destiné à déterminer une stratégie de conduite avec dynamique longitudinale pour le véhicule sur la base d'une spécification de l'état de conduite, et comprenant une unité de détection de circulation suivante (20) destiné à détecter un véhicule suivant, dans lequel le dispositif de commande (10) est conçu pour mettre en oeuvre le procédé selon l'une des revendications 1 à 8.

10. Système d'aide à la conduite selon la revendication 9, comprenant en outre un système de communication (34) destiné à recevoir des informations de localisation concernant une circonstance susceptible d'exiger une décélération future du véhicule ou susceptible d'autoriser une augmentation future de la vitesse de conduite, dans lequel le dispositif de commande (10) est conçu pour déterminer la spécification d'état de conduite sur la base des informations de localisation reçues.

11. Système d'aide à la conduite selon la revendication 9 ou 10, comprenant en outre une unité de basculement (26 ; 28) destinée à mettre en oeuvre le guidage longitudinal du véhicule, dans lequel le dispositif de commande (10) est relié à l'unité de basculement (26 ; 28) pour faire basculer le véhicule dans le mode de guidage longitudinal sur la base de la stratégie de conduite déterminée.
